(19) Europäisches Patentamt / European Patent Office / Office européen des brevets

(11) **EP 1 806 053 A1**

(12) **EUROPEAN PATENT APPLICATION**
published in accordance with Art. 158(3) EPC


(43) Date of publication: **11.07.2007 Bulletin 2007/28**

(21) Application number: **05805134.3**

(22) Date of filing: **21.10.2005**

(51) Int Cl.:
***A01N 43/90*** (2006.01) ***A01N 33/18*** (2006.01)
***A01N 35/10*** (2006.01) ***A01N 39/02*** (2006.01)
***A01N 43/40*** (2006.01) ***A01N 43/50*** (2006.01)
***A01N 43/76*** (2006.01) ***A01N 47/12*** (2006.01)
***A01N 47/30*** (2006.01) ***A01N 47/36*** (2006.01)
***A01N 47/38*** (2006.01)

(86) International application number: **PCT/JP2005/019413**

(87) International publication number: **WO 2006/046485 (04.05.2006 Gazette 2006/18)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.10.2004 JP 2004309532**



(71) Applicant: **NIHON NOHYAKU CO., LTD.**
**Tokyo 103-8236 (JP)**

(72) Inventors:
- **KUMATA, Shuji, C/O. LTD., RESEARCH CENTER Osaka 586-0094 (JP)**
- **NATSUME, Bunji, C/O. LTD., RESEARCH CENTER Osaka 586-0094 (JP)**

(74) Representative: **HOFFMANN EITLE**
**Patent- und Rechtsanwälte**
**Arabellastrasse 4**
**81925 München (DE)**


(54) **HERBICIDE COMPOSITIONS FOR UPLAND FARMING AND CONTROL METHOD**


(57) The present invention relates to a herbicide composition comprising, as active ingredients, at least one compound selected from the thienopyrimidine derivatives represented by the formula (I):

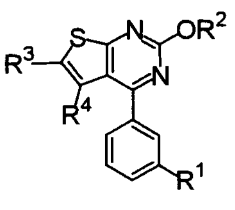

( I )

wherein $R^1$ represents a fluoroalkyl group having 1 or 2 carbon atoms, a fluoroalkoxy group having 1 or 2 carbon atoms or a fluoroalkylthio group having 1 or 2 carbon atoms, $R^2$ represents a linear or branched alkyl group having 1 to 4 carbon atoms or a linear or branched fluoroalkyl group having 1 to 4 carbon atoms, and $R^3$ and $R^4$ each independently represent a hydrogen atom or a linear or branched alkyl group having 1 to 3 carbon atoms; and one or two or more kinds of herbicides selected from a urea-based herbicide, a dinitroaniline-based herbicide, a phenoxypropionic acid-based herbicide, a cyclohexanedione-based herbicide, an imidazolinone-based herbicide, a sulfonylurea-based herbicide, a carbamate-based herbicide, a triazolinone-based herbicide, a triazolopyrimidine-based herbicide, fluroxypyr or a derivative thereof, clopyralid or a derivative thereof, flufenacet, flurtamone and pinoxaden, and a method for using the same.


EP 1 806 053 A1

## Description

### TECHNICAL FIELD

The present invention relates to a herbicide composition in which two or more kinds of herbicides are mixed together so as to effectively control various harmful weeds.

### BACKGROUND ART

There have been hitherto reported a large number of compounds having herbicidal activity and these compounds are marketed and employed as herbicides at present. It is required that herbicides show an excellent herbicidal effect, possesses a broad herbicidal spectrum and are highly safe to the environment and crops. However, many of the existing herbicides do not always satisfy all of these requirements. Therefore, it has been a common practice to employ a herbicide composition in which two or more kinds of herbicides capable of compensating for each other's weaknesses are mixed together.

A thienopyrimidine derivative represented by the formula (I) constituting the herbicide composition according to the invention has been known as an active ingredient of a selective herbicide which is for use in cultivating crops such as rice, wheat, barley and the like, corn and soybean (see, for example, Patent Document 1). The individual herbicides constituting the herbicide composition according to the invention together with the thienopyrimidine derivative represented by the formula (I) are publicly known compounds (see, for example, Non-Patent Document 1 or Non-Patent Document 2).

Patent Document 1: JP-A-2004-137270
Non-Patent Document 1: The Pesticide Manual, Thirteenth Edition, 2003
Non-Patent Document 1: Shigemi Shibuya and three others, SHIBUYA INDEX-2002-9th Edition, SHIBUYA INDEX Kenkyukai, December 15, 2001

### DISCLOSURE OF THE INVENTION

#### Problems that the Invention is to Solve

However, when the thienopyrimidine derivative represented by the formula (I) is used solely, it sometimes fails to achieve a sufficient herbicidal effect depending on the kinds of weeds, crop cultivation conditions and so on. Thus, it has been required to develop a herbicide composition which has improved herbicidal characteristics, i.e., achieving an elevated herbicidal effect, possessing a broader herbicidal spectrum and having a high safety.

#### Means for Solving the Problems

The present inventors conducted intensive studies to create an excellent herbicide composition. As a result, they have found out that, by mixing the thienopyrimidine derivative represented by the formula (I) with one or more kinds of compounds known as having herbicidal activity, the time required for the expression of herbicidal effect can be shortened and the effect is synergistically enhanced compared with the case of using each ingredient solely, which makes it possible to reduce the chemical dose and broaden the herbicidal spectrum, thereby selectively control weeds over a wide range especially in the fields of wheat, barley and the like. The present invention has been thus completed.
Accordingly, the invention relates to a herbicide composition comprising, as active ingredients,
at least one compound selected from the thienopyrimidine derivatives represented by the formula (I) :

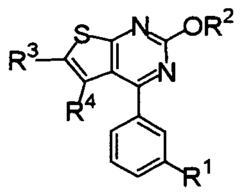

(I)

wherein $R^1$ represents a fluoroalkyl group having 1 or 2 carbon atoms, a fluoroalkoxy group having 1 or 2 carbon atoms or a fluoroalkylthio group having 1 or 2 carbon atoms,
$R^2$ represents a linear or branched alkyl group having 1 to 4 carbon atoms or a linear or branched fluoroalkyl group

having 1 to 4 carbon atoms, and
$R^3$ and $R^4$ each independently represent a hydrogen atom or a linear or branched alkyl group having 1 to 3 carbon atoms; and
one or two or more kinds of herbicides selected from a urea-based herbicide, a dinitroaniline-based herbicide, a phenoxypropionic acid-based herbicide, a cyclohexanedione-based herbicide, an imidazolinone-based herbicide, a sulfonylurea-based herbicide, a carbamate-based herbicide, a triazolinone-based herbicide, a triazolopyrimidine-based herbicide, fluroxypyr or a derivative thereof, clopyralid a derivative thereof, flufenacet, flurtamone and pinoxaden, and a method for using the same.

Advantage of the Invention

The invention provides a herbicide composition that exerts a synergistic effect and, therefore, is expected as establishing an elevated herbicidal effect and enabling weed control in a lowered chemical dose even in the case of weed species or cultivation conditions in which the thienopyrimidine derivative represented by the formula (I) or the compound(s) known as having herbicidal activity cannot exert a sufficient effect are each employed solely.

BEST MODE FOR CARRYING OUT THE INVENTION

Next, the invention will be described in greater detail. In the thienopyrimidine derivative represented by the formula (I) constituting the herbicide composition according to the invention, $R^1$ represents a fluoroalkyl group having 1 or 2 carbon atoms, a fluoroalkoxy group having 1 or 2 carbon atoms or a fluoroalkylthio group having 1 or 2 carbon atoms. Specific examples thereof include a fluoromethyl group, a difluoromethyl group, a trifluoromethyl group, a 2-fluoroethyl group, a 2,2-difluoromethyl group, a 2,2,2-trifluoroethyl group, a fluoromethoxy group, a difluoromethoxy group, a trifluoromethoxy group, a 2-fluoroethoxy group, a 2,2-difluoromethoxy group, a 2,2,2-trifluoroethoxy group, a fluoromethylthio group, a difluoromethylthio group, a trifluoromethylthio group, a 2-fluoroethylthio group, a 2,2-difluoromethylthio group, and a 2,2,2-trifluoroethylthio group. $R^2$ represents a linear or branched alkyl group having 1 to 4 carbon atoms or a linear or branched fluoroalkyl group having 1 to 4 carbon atoms. Specific examples thereof include a methyl group, an ethyl group, a propyl group, an isopropyl group, a butyl group, an isobutyl group, a sec-butyl group, a tert-butyl group, a fluoromethyl group, a difluoromethyl group, a trifluoromethyl group, a 2-fluoroethyl group, a 2,2-difluoromethyl group, a 2,2,2-trifluoroethyl group, a 3-fluoropropyl group, a 3,3,3-trifluoropropyl group, a 2,2,3,3-tetrafluoropropyl group, a 2,2,3,3,3-pentafluoropropyl group, a 1-methyl-2,2,2-trifluoroethyl group, a 2,2,2-trifluoro-1-(trifluoromethyl)ethyl group, and 1-methyl-2,2,3,3,3-pentafluoropropyl group. $R^3$ and $R^4$ each independently represent a hydrogen atom or a linear or branched alkyl group having 1 to 3 carbon atoms. Specific examples thereof include a hydrogen atom, a methyl group, an ethyl group, a propyl group, and an isopropyl group.

In the thienopyrimidine derivatives represented by the formula (I), those in which $R^1$ represents a trifluoromethyl group, a trifluoromethoxy group or a trifluoromethylthio group, $R^2$ represents a fluoroalkyl group having 2 or 3 carbon atoms or an alkyl group having 1 to 3 carbon atoms, $R^3$ represents a methyl group or an ethyl group and $R^4$ represents a hydrogen atom are preferable. Among all, the compounds listed in Table 1 can be referred as particularly preferable compounds.

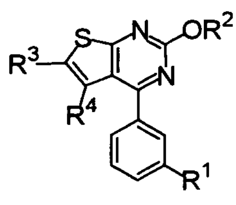

(I)

Table 1

| No. | $R^1$ | $R^2$ | $R^3$ | $R^4$ | Melting point (°C) |
|---|---|---|---|---|---|
| 1 | $CF_3$ | n-$C_3H_7$ | $C_2H_5$ | H | Viscous oily matter |
| 2 | $CF_3$ | $CH_3$ | $CH_3$ | H | 77 |
| 3 | $CF_3$ | $C_2H_5$ | $CH_3$ | H | 98 |

(continued)

| No. | $R^1$ | $R^2$ | $R^3$ | $R^4$ | Melting point (°C) |
|---|---|---|---|---|---|
| 4 | $CF_3$ | i-$C_3H_7$ | $CH_3$ | H | 118-119 |
| 5 | $CF_3$ | $CH_2CF_3$ | $CH_3$ | H | 100-101 |
| 6 | $CF_3$ | $CH_2CF_2CHF_2$ | $CH_3$ | H | 100-101 |
| 7 | $CF_3$ | $CH_2CF_2CF_3$ | $CH_3$ | H | 43-44 |
| 8 | $OCF_3$ | $CH_2CF_3$ | $CH_3$ | H | 60-62 |
| 9 | $OCF_3$ | $CH_2CF_2CHF_2$ | $CH_3$ | H | 104-106 |
| 10 | $SCF_3$ | $CH_2CF_3$ | $CH_3$ | H | 73-75 |

In the case of controlling weeds with the use of the thienopyrimidine derivative represented by the formula (I), the application dose varies depending on the crop to be treated, weed species, application states, application conditions, and the like. In general, the application dose expressed in terms of the active ingredient ranges from 0.1 to 2,000 g/ha, preferably from 1 to 1,000 g/ha and particularly preferably from 10 to 500 g/ha.

The composition containing the thienopyrimidine derivative represented by the formula (I) according to the invention can selectively control weeds over a wide range especially in the fields of wheat, barley and the like. Therefore, it is preferable to mix it with a herbicide commonly employed in the fields of wheat, barley and the like.

Examples (expressed in common names) of the urea-based herbicide include diuron, linuron, fluometuron, chlorotoluron, isoproturon, daimuron, isouron, tebuthiuron, methabenzthiazuron, and methobenzuron. Isoproturon, chlorotoluron or methabenzthiazuron is particularly preferred.

In the invention, the application dose of the urea-based herbicide varies depending on the kind of the compound. For example, the application dose of isoproturon ranges from 10 to 10,000 g/ha, preferably from 100 to 5,000 g/ha and particularly preferably from 500 to 2,000 g/ha. In the herbicide composition according to the invention, the ratio of the contents of thienopyrimidine derivative represented by the formula (I) and the urea-based herbicide varies depending on the weeds to be controlled, application states, application conditions, and the like. In general, it is preferable to use 0.1 to 5000 parts by weight, particularly preferably 1 to 200 parts by weight, of the urea-based herbicide per 1 part by weight of the thienopyrimidine derivative represented by the formula (I).

Examples (expressed in common names) of the dinitroaniline-based herbicide include trifluralin, benfluralin, prodiamine, oryzalin, butralin, and pendimethalin. Pendimethalin or trifluralin is particularly preferred.

In the invention, the application dose of the dinitroaniline-based herbicide varies depending on the kind of the compound. For example, the application dose of pendimethalin ranges from 10 to 10,000 g/ha, preferably from 100 to 5,000 g/ha and particularly preferably from 500 to 2,000 g/ha. In the herbicide composition according to the invention, the ratio of the contents of thienopyrimidine derivative represented by the formula (I) and the dinitroaniline-based herbicide varies depending on the weeds to be controlled, application states, application conditions, and the like. In general, it is preferable to use 0.1 to 5000 parts by weight, particularly preferably 1 to 200 parts by weight, of the dinitroaniline-based herbicide per 1 part by weight of the thienopyrimidine derivative represented by the formula (I).

Examples (expressed in common names) of the phenoxypropionic acid-based herbicide include diclofop, derivatives thereof and optically active substances thereof; fluazifop, derivatives thereof and optically active substances thereof; clodinafop, derivatives thereof and optically active substances thereof; haloxyfop, derivatives thereof and optically active substances thereof; fenoxaprop, derivatives thereof and optically active substances thereof; cyhalofop, derivatives thereof and optically active substances thereof; and quizalofop, derivatives thereof and optically active substances thereof. Diclofop, derivatives thereof and optically active substances thereof; fenoxaprop, derivatives thereof and optically active substances thereof; or clodinafop, derivatives thereof and optically active substances thereof are particularly preferred.

In the invention, the application dose of the phenoxypropionic acid-based herbicide varies depending on the kind of the compound. For example, the application dose of clodinafop ranges from 10 to 10,000 g/ha, preferably from 10 to 1,000 g/ha and particularly preferably from 30 to 500 g/ha. In the herbicide composition according to the invention, the ratio of the contents of thienopyrimidine derivative represented by the formula (I) and the phenoxypropionic acid-based herbicide varies depending on the weeds to be controlled, application states, application conditions, and the like. In general, it is preferable to use 0.1 to 5000 parts by weight, particularly preferably 1 to 200 parts by weight, of the phenoxypropionic acid-based herbicide per 1 part by weight of the thienopyrimidine derivative represented by the formula (I).

Examples (expressed in common names) of the cyclohexanedione-based herbicide include sethoxydim, cycloxydim, tralkoxydim, butroxydim, and clethodim, tepraloxydim. Tralkoxydim is particularly preferred.

In the invention, the application dose of the cyclohexanedione-based herbicide varies depending on the kind of the compound. For example, the application dose of tralkoxydim ranges from 10 to 10,000 g/ha, preferably from 10 to 1,000 g/ha and particularly preferably from 30 to 500 g/ha. In the herbicide composition according to the invention, the ratio of the contents of thienopyrimidine derivative represented by the formula (I) and the cyclohexanedione-based herbicide varies depending on the weeds to be controlled, application states, application conditions, and the like. In general, it is preferable to use 0.1 to 5000 parts by weight, particularly preferably from 1 to 200 parts by weight, of the cyclohexanedione-based herbicide per 1 part by weight of the thienopyrimidine derivative represented by the formula (I).

Examples (expressed in common names) of the imidazolinone-based herbicide include imazamethabenz-methyl, imazapyr and salts thereof, imazapic and salts thereof, imazaquin and salts thereof, imazethapyr and salts thereof, and imazamox and salts thereof. Imazamethabenz-methyl is particularly preferred.

In the invention, the application dose of the imidazolinone-based herbicide varies depending on the kind of the compound. For example, the application dose of imazamethabenz ranges from 10 to 10,000 g/ha, preferably from 10 to 1,000 g/ha and particularly preferably from 30 to 500 g/ha. In the herbicide composition according to the invention, the ratio of the contents of thienopyrimidine derivative represented by the formula (I) and the imidazolinone-based herbicide varies depending on the weeds to be controlled, application states, application conditions, and the like. In general, it is preferable to use 0.1 to 5000 parts by weight, particularly preferably 1 to 200 parts by weight, of the imidazolinone-based herbicide per 1 part by weight of the thienopyrimidine derivative represented by the formula (I).

Examples (expressed in common names) of the sulfonylurea-based herbicide include amidosulfuron, iodosulfuron, chlorimuron-ethyl, sulfometuron-methyl, primisulfuron, bensulfuron-methyl, ethoxysulfuron, cyclosulfamuron, chlorsulfuron, metsulfuron-methyl, tribenuron-methyl, triasulfuron, tritosulfuron, trifloxysulfuron, cinosulfuron, ethametsulfuron-methyl, triflusulfuron-methyl, prosulfuron, thifensulfuron-methyl, pyrazosulfuron-ethyl, halosulfuron-methyl, foramsulfuron, flazasulfuron, mesosulfuron, rimsulfuron, nicosulfuron, flupyrsulfuron-methyl and salts thereof, imazosulfuron, and sulfosulfuron. Preferable examples thereof include amidosulfuron, iodosulfuron, chlorimuron-ethyl, sulfometuron-methyl, primisulfuron, ethoxysulfuron, chlorsulfuron, metsulfuron-methyl, tribenuron-methyl, triasulfuron, tritosulfuron, triflusulfuron-methyl, prosulfuron, thifensulfuron-methyl, halosulfuron-methyl, flazasulfuron, mesosulfuron, rimsulfuron, nicosulfuron, flupyrsulfuron-methyl and salts thereof and sulfosulfuron. Particularly preferable examples thereof include amidosulfuron, iodosulfuron, ethoxysulfuron, chlorsulfuron, metsulfuron-methyl, tribenuron-methyl, triasulfuron, tritosulfuron, thifensulfuron-methyl, halosulfuron-methyl, mesosulfuron, flupyrsulfuron-methyl and salts thereof and sulfosulfuron.

In the invention, the application dose of the sulfonylurea-based herbicide varies depending on the kind of the compound. For example, the application dose of flupyrsulfuron-methyl ranges from 0.1 to 1,000 g/ha, preferably from 1 to 100 g/ha and particularly preferably from 5 to 20 g/ha. In the herbicide composition according to the invention, the ratio of the contents of thienopyrimidine derivative represented by the formula (I) and the sulfonylurea-based herbicide varies depending on the weeds to be controlled, application states, application conditions, and the like. In general, it is preferable to use 0.001 to 100 parts by weight, particularly preferably 0.01 to 2 parts by weight, of the sulfonylurea-based herbicide per 1 part by weight of the thienopyrimidine derivative represented by the formula (I).

Examples of the carbamate-based herbicide include sulfallate, di-allate, tri-allate, EPTC, butylate, esprocarb, orbencarb, thiobencarb, molinate, isopolinate, dimepiperate, pyributicarb, phenmedipham, desmediphan, chlorpropham, and asulam. Tri-allate is particularly preferred.

In the invention, the application dose of the carbamate-based herbicide varies depending on the kind of the compound. For example, the application dose of tri-allate ranges from 10 to 10,000 g/ha, preferably from 100 to 5,000 g/ha and particularly preferably from 500 to 2,000 g/ha. In the herbicide composition according to the invention, the ratio of the contents of thienopyrimidine derivative represented by the formula (I) and the carbamate-based herbicide varies depending on the weeds to be controlled, application states, application conditions, and the like. In general, it is preferable to use 0.1 to 5000 parts by weight, particularly preferably from 1 to 200 parts by weight, of the carbamate-based herbicide per 1 part by weight of the thienopyrimidine derivative represented by the formula (I).

Examples of the triazolinone-based herbicide include amicarbazone, flucarbazone and salts thereof, propoxycarbazone and salts thereof, sulfentrazone, and carfentrazone-ethyl. Flucarbazone and salts thereof or propoxycarbazone and salts thereof are particularly preferred.

In the invention, the application dose of the triazolinone-based herbicide varies depending on the kind of the compound. For example, the application dose of flucarbazone ranges from 0.1 to 1,000 g/ha, preferably from 1 to 100 g/ha and particularly preferably from 5 to 50 g/ha. In the herbicide composition according to the invention, the ratio of the contents of thienopyrimidine derivative represented by the formula (I) and the sulfonylurea-based herbicide varies depending on the weeds to be controlled, application states, application conditions, and the like. In general, it is preferable to use 0.01 to 100 parts by weight, particularly preferably 0.1 to 2 parts by weight, of the triazolinone-based herbicide per 1 part by weight of the thienopyrimidine derivative represented by the formula (I).

Examples of the triazolopyrimidine-based herbicide include flumetsulam, metosulam, diclosulam, cloransulam-methyl, florasulam, and penoxsulam. Flumetsulam, florasulam or cloransulam-methyl is particularly preferred.

In the invention, the application dose of the triazolopyrimidine-based herbicide varies depending on the kind of the compound. For example, the application dose of florasulam ranges from 0.1 to 1,000 g/ha, preferably from 1 to 100 g/ha and particularly preferably from 5 to 50 g/ha. In the herbicide composition according to the invention, the ratio of the contents of thienopyrimidine derivative represented by the formula (I) and the triazolopyrimidine-based herbicide varies depending on the weeds to be controlled, application states, application conditions, and the like. In general, it is preferable to use 0.001 to 100 parts by weight, particularly preferably 0.01 to 10 parts by weight, of the triazolopyrimidine-based herbicide per 1 part by weight of the thienopyrimidine derivative represented by the formula (I).

Furthermore, the composition of the thienopyrimidine derivative represented by the formula (I) according to the invention can be appropriately mixed with herbicides such as fluroxypyr and derivatives thereof, clopyralid and derivatives thereof, flufenacet, flurtamone and pinoxaden.

In the invention, the application dose of clopyralid ranges from 10 to 10,000 g/ha, preferably from 50 to 2,000 g/ha and particularly preferably from 100 to 1,000 g/ha. In the herbicide composition according to the invention, the ratio of the contents of thienopyrimidine derivative represented by the formula (I) and clopyralid varies depending on the weeds to be controlled, application states, application conditions, and the like. In general, it is preferable to use 0.1 to 5000 parts by weight, particularly preferably 1 to 200 parts by weight, of clopyralid per 1 part by weight of the thienopyrimidine derivative represented by the formula (I).

In the invention, the application dose of fluroxypyr ranges from 10 to 10,000 g/ha, preferably from 50 to 2,000 g/ha and particularly preferably from 100 to 1,000 g/ha. In the herbicide composition according to the invention, the ratio of the contents of thienopyrimidine derivative represented by the formula (I) and fluroxypyr varies depending on the weeds to be controlled, application states, application conditions, and the like. In general, it is preferable to use 0.1 to 5000 parts by weight, particularly preferably 1 to 200 parts by weight, of fluroxypyr per 1 part by weight of the thienopyrimidine derivative represented by the formula (I).

In the invention, the application dose of flufenacet ranges from 10 to 10,000 g/ha, preferably from 10 to 1,000 g/ha and particularly preferably from 30 to 500 g/ha. In the herbicide composition according to the invention, the ratio of the contents of thienopyrimidine derivative represented by the formula (I) and flufenacet varies depending on the weeds to be controlled, application states, application conditions, and the like. In general, it is preferable to use 0.1 to 5000 parts by weight, particularly preferably 1 to 200 parts by weight, of flufenacet per 1 part by weight of the thienopyrimidine derivative represented by the formula (I).

In the invention, the application dose of flurtamone ranges from 10 to 10,000 g/ha, preferably from 10 to 1,000 g/ha and particularly preferably from 30 to 500 g/ha. In the herbicide composition according to the invention, the ratio of the contents of thienopyrimidine derivative represented by the formula (I) and flurtamone varies depending on the weeds to be controlled, application states, application conditions, and the like. In general, it is preferable to use 0.1 to 5000 parts by weight, particularly preferably 1 to 200 parts by weight, of flurtamone per 1 part by weight of the thienopyrimidine derivative represented by the formula (I).

In the invention, the application dose of pinoxaden ranges from 10 to 10,000 g/ha, preferably from 10 to 1,000 g/ha and particularly preferably from 30 to 500 g/ha. In the herbicide composition according to the invention, the ratio of the contents of thienopyrimidine derivative represented by the formula (I) and pinoxaden varies depending on the weeds to be controlled, application states, application conditions, and the like. In general, it is preferable to use 0.1 to 5000 parts by weight, particularly preferably 1 to 200 parts by weight, of pinoxaden per 1 part by weight of the thienopyrimidine derivative represented by the formula (I).

The application dose of the herbicide composition according to the invention may be optionally selected within the effective dose ranges of the thienopyrimidine derivative represented by the formula (I) and each herbicide to be mixed therewith. In the invention, it is also possible to mix the thienopyrimidine derivative represented by the formula (I) with two or more of the herbicides as described above. In this case, the application dose may be optionally selected within the effective dose ranges of the individual herbicides.

To control weeds by using the herbicide composition according to the invention, the herbicide composition is usually formulated into various pesticide preparations with the use of auxiliary agents such as a carrier, a surfactant and so on in accordance with a conventionally employed method before the application. In addition, it is also possible that the thienopyrimidine derivative represented by the formula (I) and the individual herbicides are separately formulated into preparations which are simultaneously or successively applied to thereby form a composition in the course of application. The herbicide composition according to the invention is not particularly restricted in application state or application method. Namely, it can be used either in soil treatment or foliar treatment in cultivating various crops. In particular, it can effectively control major weeds in cultivating wheat, barley and the like, such as *Alopecurus myosuroides Huds., Alopecurus geniculatas, Apera interrupta (L.) Beauv., Poa annua, Bromus catharticus Vahl, Avena fatua L.,* wild *Avena sativa L., Lolium multiflorum Lam., Bromus tectorum L., Setaria viridis, Galium spurium L. var. echinospermon (Wallr.) Hayek, Stellaria media Villars, Matricaria inodora L., Matricaria matricarioides (Less.) Porter, Rodgersia podophylla A. Gray, Veronica persica Poir., Veronica hederaefolia L.* , violet *(Viola mandshurica W. Becker),* corn poppy *(Papaver rhoeas L.), Capsella bursa-pastoris Medicus, Lamium purpureum L., Lamium amplexicaule L.,* wild *Brassica*

*juncea Czern. et Coss. var. cernua Jorb. et Hem., Chenopodium album L., Kochia scoparia (L.) Schrader, Fallopia convolvulus (L.) A.Löve, Persicaria scabra (Moench) Mold., Persicaria vulgaris Webb.* et *Miq., Portulaca oleracea L., Sinapis alba L., Thlaspi arvense L., Polygonum aviculare L., Amaranthus retroflexus L., Galinsoga ciliata (Raf.) Blake,* and *Senecio vulgaris L.* by the foliar treatment while being safe to wheat, barley and the like.

The composition according to the invention can be used in an arbitrary dosage form such as a solution, an emulsifiable concentrate, a wettable powder, a water soluble powder, wettable granules, water soluble granules, a suspension, an emulsion, a suspoemulsion, a dust, granules or a gel by mixing a solid carrier or a liquid carrier and optionally adding a surfactant and/or other a formulation auxiliary commonly employed in pesticide preparations such as a permeation agent, a spreading agent, a thickener, an antifreezing agent, a binder, an anticaking agent, and a decomposition inhibitor. It is also possible to enclose the composition of the invention in a water soluble package. Examples of the solid carrier to be used in the formulation include natural minerals such as kaolinite, diatomaceous earth, bentonite, clay, acid clay, active carbon, sericite, talc, attapulgite and zeolite, inorganic salts such as calcium carbonate, ammonium sulfate, sodium sulfate and potassium chloride, synthetic silicic acid and synthetic silicic acid salt. Examples of the liquid carrier include water, alcohols such as methanol, ethanol, ethylene glycol, propylene glycol and isopropanol, aromatic hydrocarbons such as toluene, xylene, an alkylbenzene and an alkylnaphthalene, ethers such as dioxane, diisopropyl ether and butylcellosolve, ketones such as acetone, methyl ethyl ketone and cyclohexanone, esters such as ethyl acetate and butyl acetate, acid amides such as dimethylformamide and dimethylacetamide, nitriles such as acetonitrile and isobutyronitrile, halogenated hydrocarbons such as dichloroethane and vegetable oils such as soybean oil, rapeseed oil, cotton seed oil and castor oil.

Examples of the surfactant include alkyl sulfuric acid esters, alkyl aryl sulfonic acid salts, alkyl sulfonic acid salts, alkyl aryl ethers and polyoxyethylene adducts thereof, polyethylene glycol ethers, polyhydric alcohol esters, and sugar alcohol derivatives. Examples of other auxiliary agents for formulation include sticking agents or dispersing agents such as casein, gelatin, polysaccharides such as starch, acacia, cellulose derivatives and alginic acid, lignin derivatives and synthetic water soluble polymers such as polyvinyl alcohol, polyvinylpyrrolidone and polyacrylic acid, and stabilizers such as vegetable oils, mineral oils, fatty acids, fatty acid esters. The herbicide composition according to the invention may be used as a mixture with another herbicide to thereby further potentiate the herbicidal effect. Furthermore, it can be used together with an insecticide, a bactericide, a plant growth regulator, a fertilizer or a soil improving agent.

In the invention, the thienopyrimidine derivative represented by the formula (I) may be blended and applied together with the herbicide other than the herbicides as described above. Examples of the herbicide appropriately mixed therewith include organophosphorus-based herbicides such as glyphosate and salts thereof, glufosinate and salts thereof, bialaphos and salts thereof, butamifos, anilofos and bensulide; amide-based herbicides such as propachlor, dimethachlor, metazachlor, alachlor, butachlor, pretilachlor, acetochlor, metolachlor and optical isomers thereof, thenylchlor, diethatyl, dimethenamid, napropamide, clomeprop, propanil, propyzamide, diflufenican, picolinafen, beflubutamid, mefenacet, bromobutide and isoxaben; carboxylic acid-based herbicides such as 2,4-D and derivatives thereof, 2,4,5-T and derivatives thereof, MCPA and derivatives thereof, dichlorprop and derivatives and optical isomers thereof, mecoprop and derivatives and optical isomers thereof, MCPB and derivatives thereof, dicamba and derivatives thereof, 2,3,6-TBA and derivatives thereof, quinclorac and derivatives thereof, quinmerac and derivatives thereof, picloram and derivatives thereof, triclopyr and derivatives thereof and benazolin and derivatives thereof; phenol-based herbicides such as bromoxynil and derivatives thereof, joxynil and derivatives thereof, dinoterb and derivatives thereof and dinoseb and derivatives thereof; trione-based herbicides such as sulcotrione, mesotrione and benzobicyclon; diphenyl ether-based herbicides such as chlornitrofen, chlomethoxynil, oxyfluorfen, bifenox, acifluorfen and salts thereof, fluorglycofen, lactofen, fomesafen and aclonifen; bipyridinium-based herbicides such as paraquat and diquat; pyrazole-based herbicides such as pyrazolate, pyrazoxyfen, benzofenap and pyrasulfotole; triazine-based herbicides such as simazine, atrazine, propazine, cyanazine, simetryn, dimethametryn, ametryn, prometryn, prometon, triaziflam and metribuzin; indanofan, fluridone, flurochloridone, norflurazon, cafenstrole, fentrazamide, pentoxazone, oxadiazon, oxadiargyl, pyraflufen-ethyl, isopropazole, flupropacil, butafenacil, flufenpyr-ethyl, pyraclonil, flupoxam, clomazone, isoxaflutole, isoxachlortole, dithiopyr, thiazopyr, pyrithiobac and salts thereof, pyriminobae-methyl, bispyribac and salts thereof, bromacil, terbacil, lenacil, oxaziclomefone, cinmethylin, chlorphthalim, flumiclorac-pentyl, flumioxazin, cinidon-ethyl, azafenidin, fluthiacet-methyl, benfuresate, ethofumesate, bentazone, and dichlobenil.

Example 1

The present invention will be described in greater detail by referring to the following Formulation Examples and Test Examples. However, the invention is not restricted thereto without departing from the gist thereof. In these Examples, the following compounds were employed as the ingredients of the herbicide compositions according to the invention.

Ingredient (A): compound No.8 shown in Table 1.

Ingredient (B): isoproturon (common name).

Ingredient (C): pendimethalin (common name).
Ingredient (D): sodium salt of flupyrsulfuron-methyl (common name).
Ingredient (E): florasulam (common name).
Ingredient (F): trifluralin (common name).

In the following composition examples, all parts are by weight.

Formulation Example 1

A wettable powder was obtained by thoroughly mixing 2 parts of the ingredient (A), 60 parts of the ingredient (B), (C) or (F), 3 parts of calcium ligninsulfonate, 2 parts of sodium lauryl sulfate and 33 parts of diatomaceous earth and milling the mixture.

Formulation Example 2

A wettable powder was obtained by thoroughly mixing 10 parts of the ingredient (A), 2 parts of the ingredient (D) or (E), 3 parts of calcium ligninsulfonate, 2 parts of sodium lauryl sulfate and 83 parts of diatomaceous earth and milling the mixture.

Formulation Example 3

A wettable powder was obtained by thoroughly mixing 5 parts of the ingredient (A), 50 parts of the ingredient (B), (C) or (F), 3 parts of calcium ligninsulfonate, 2 parts of sodium lauryl sulfate and 40 parts of diatomaceous earth and milling the mixture.

Formulation Example 4

A wettable powder was obtained by thoroughly mixing 10 parts of the ingredient (A), 1 part of the ingredient (D) or (E), 3 parts of calcium ligninsulfonate, 2 parts of sodium lauryl sulfate and 84 parts of diatomaceous earth and milling the mixture.

Formulation Example 5

Wettable granules were obtained by thoroughly mixing 2 parts of the ingredient (A), 60 parts of the ingredient (B), (C) or (F), 5 parts of polyethylene glycol dialkyl aryl ether sulfuric acid ester, 10 parts of calcium ligninsulfonate and 23 parts of diatomaceous earth, milling the mixture, adding a small amount of water thereto, kneading the resultant mixture, granulating with an extrusion granulator and then drying.

Formulation Example 6

Wettable granules were obtained by thoroughly mixing 20 parts of the ingredient (A), 4 parts of the ingredient (D) or (E), 5 parts of polyethylene glycol dialkyl aryl ether sulfuric acid ester, 10 parts of calcium ligninsulfonate and 61 parts of diatomaceous earth, milling the mixture, adding a small amount of water thereto, kneading the resultant mixture, granulating with an extrusion granulator and then drying.

Formulation Example 7

Wettable granules were obtained by thoroughly mixing 6 parts of the ingredient (A), 60 parts of the ingredient (B), (C) or (F), 5 parts of polyethylene glycol dialkyl aryl ether sulfuric acid ester, 10 parts of calcium ligninsulfonate and 19 parts of diatomaceous earth, milling the mixture, adding a small amount of water thereto, kneading the resultant mixture, granulating with an extrusion granulator and then drying.

Formulation Example 8

Wettable granules were obtained by thoroughly mixing 20 parts of the ingredient (A), 2 parts of the ingredient (D) or (E), 5 parts of polyethylene glycol dialkyl aryl ether sulfuric acid ester, 10 parts of calcium ligninsulfonate and 63 parts of diatomaceous earth, milling the mixture, adding a small amount of water thereto, kneading the resultant mixture, granulating with an extrusion granulator and then drying.

Formulation Example 9

A suspension was obtained by mixing 2 parts of the ingredient (A), 60 parts of the ingredient (B), (C) or (F), 5 parts of calcium ligninsulfonate, 3 parts of sodium lauryl sulfate, 0.2 part of xanthan gum, 5 parts of white carbon and 24.8 parts of water and wet-milling the mixture.

Formulation Example 10

A suspension was obtained by mixing 5 parts of the ingredient (A), 1 part of the ingredient (D) or (E), 5 parts of calcium ligninsulfonate, 3 parts of sodium lauryl sulfate, 0.2 part of xanthan gum, 5 parts of white carbon and 80.8 parts of water and wet-milling the mixture.

Formulation Example 11

A suspension was obtained by mixing 5 parts of the ingredient (A), 50 parts of the ingredient (B), (C) or (F), 5 parts of calcium ligninsulfonate, 3 parts of sodium lauryl sulfate, 0.2 part of xanthan gum, 5 parts of white carbon and 31.8 parts of water and wet-milling the mixture.

Formulation Example 12

A suspension was obtained by mixing 10 parts of the ingredient (A), 1 part of the ingredient (D) or (E), 5 parts of calcium ligninsulfonate, 3 parts of sodium lauryl sulfate, 0.2 part of xanthan gum, 5 parts of white carbon and 75.8 parts of water and wet-milling the mixture.

Formulation Example 13

An emulsifiable concentrate was obtained by mixing and melting 2 parts of the ingredient (A), 60 parts of the ingredient (B), (C) or (F), 15 parts of N,N-dimethylacetamide, 15 parts of xylene and 8 parts of polyoxyethylene alkyl aryl ether.

Formulation Example 14

An emulsifiable concentrate was obtained by mixing and melting 20 parts of the ingredient (A), 4 parts of the ingredient (D) or (E), 15 parts of N,N-dimethylacetamide, 53 parts of xylene and 8 parts of polyoxyethylene alkyl aryl ether.

Formulation Example 15

An emulsifiable concentrate was obtained by mixing and melting 5 parts of the ingredient (A), 50 parts of the ingredient (B), (C) or (F), 15 parts of N,N-dimethylacetamide, 22 parts of xylene and 8 parts of polyoxyethylene alkyl aryl ether.

Formulation Example 16

An emulsifiable concentrate was obtained by mixing and melting 20 parts of the ingredient (A), 1 part of the ingredient (D) or (E), 15 parts of N,N-dimethylacetamide, 56 parts of xylene and 8 parts of polyoxyethylene alkyl aryl ether.

Next, Test Examples of the herbicide compositions according to the invention will be presented. In the following Test Examples, the ingredient (A) was mixed with the ingredient (B), (C), (D), (E) or (F) in practice. As a result, an effect exceeding the effect expected from the effects achieved by using the individual ingredients solely (i.e., a synergistic effect) was observed. The term "synergistic effect" means the effect achieved in the case where the effect achieved by two or more chemicals acting simultaneously exceeds the additive effect expected from the activities of the respective chemicals used solely. The activity expected by using a specific combination of two herbicides (hereinafter called "expectation") can be calculated in accordance with the following Colby's formula (refer to Colby, S.R., Weeds, 15, p.20 to 22 (1967)).

Numerical formula 1

$$E = X + Y - (X \times Y/100)$$

(In the above formula, E represents an inhibitory rate expected in the case of applying a mixture of p kg/ha of a herbicide A and q kg/ha of another herbicide B. X represents the inhibitory rate achieved by the application of p kg/ha of the herbicide A. Y represents the inhibitory rate achieved by the application of q kg/ha of the herbicide B.)

When the effect achieved by the mix application in practice exceeds the value E, the combination can be regarded as achieving a synergistic effect. Inhibitory rate was determined in accordance with the following numerical formula 2.

Numerical formula 2

Inhibitory rate (%) = (1 - fresh weight in treated lot/fresh weight in untreated lot) × 100

Test Example 1: Foliar application test on *Alopecurus myosuroides Huds.* in upland field condition

A resin vat having an area of 200 $cm^2$ was filled with upland soil that was diluvial clay loam soil. After fertilization, *Alopecurus myosuroides Huds.* was sowed and the seeds were evenly covered with the soil. Then, the plants were grown under controlled conditions in a greenhouse. When the test weeds grew to the 2.0 to 2.5 leaf stage, each herbicide having been diluted at a definite concentration and mixed was uniformly sprayed to the foliage with a small-sized high pressure sprayer. The preparation containing the ingredient (A) alone was prepared in accordance with Formulation Example 1 but adding diatomaceous earth to compensate for the decrease in the ingredient (B), (C) or (F). As the preparations respectively containing the ingredients (B) and (C) alone, marketed flowables were employed. As the preparation containing the ingredient (F) alone, a marketed emulsifiable concentrate was employed. The mixed preparations were prepared by mixing the same. Then, the plants were grown under controlled conditions in the greenhouse. On the day 28 after the application, the fresh weight of the above-ground part of each weed was measured and the inhibitory rate (%) was determined in accordance with Numerical Formula 2 and the expectation was calculated in accordance with Numerical Formula 1. Tables 2 and 3 show the results.

Table 2

| Compound applied | Dose (g a.i./ha) | *Alopecurus myosuroides Huds.* | |
|---|---|---|---|
| | | Inhibitory rate (%) | Expectation (%) |
| (A) + (B) | 50 + 1000 | 100 | 76 |
| | 50 + 2000 | 100 | 92 |
| | 100 + 1000 | 100 | 78 |
| | 100 + 2000 | 100 | 93 |
| (A) + (C) | 50 + 1000 | 83 | 34 |
| | 50 + 2000 | 93 | 38 |
| | 100 + 1000 | 92 | 41 |
| | 100 + 2000 | 95 | 45 |
| (A) | 50 | 21 | |
| | 100 | 30 | |
| (B) | 1000 | 69 | |
| | 2000 | 90 | |

(continued)

| Compound applied | Dose (g a.i./ha) | Alopecurus myosuroides Huds. | |
|---|---|---|---|
| | | Inhibitory rate (%) | Expectation (%) |
| (C) | 1000 | 16 | |
| | 2000 | 22 | |

Table 3

| Compound applied | Dose (g a.i./ha) | Alopecurus myosuroides Huds. | |
|---|---|---|---|
| | | Inhibitory rate (%) | Expectation (%) |
| (A) + (F) | 50 + 1000 | 80 | 69 |
| | 50 + 2000 | 99 | 90 |
| | 100 + 1000 | 95 | 78 |
| | 100 + 2000 | 99 | 93 |
| (A) | 50 | 30 | |
| | 100 | 50 | |
| (F) | 1000 | 55 | |
| | 2000 | 85 | |

As clearly shown in Tables 2 and 3, the application of each combination exerted an excellent herbicidal effect largely exceeding the expectation on *Alopecurus myosuroides Huds.* compared with the case of the foliar application of each active ingredient (a.i.) alone.

Test Example 2: Foliar application test on *Stellaria media Villars* and *Matricaria inodora L.* in upland field condition

A resin vat having an area of 200 $cm^2$ was filled with upland soil that was diluvial clay loam soil. After fertilization, *Stellaria media Villars* and *Matricaria inodora L.* were sowed and the seeds were evenly covered with the soil. Then, the plants were grown under controlled conditions in a greenhouse. When the test weeds grew to the 2.0 to 2.5 leaf stage, each herbicide having been diluted at a definite concentration and mixed was uniformly sprayed to the foliage with a small-sized high pressure sprayer. The preparation containing the ingredient (A) alone was prepared in accordance with Formulation Example 12 but adding water to compensate for the decrease in the ingredient (D) or (E). As the preparation containing the ingredient (D) alone, marketed wettable granules were employed. As the preparation containing the ingredient (E) alone, a marketed flowable was employed. The mixed preparations were prepared by mixing the same. Then, the plants were grown under controlled conditions in the greenhouse. On the day 28 after the application, the fresh weight of the above-ground part of each weed was measured and the inhibitory rate and the expectation were determined as in Test Example 1. Tables 4 and 5 show the results.

Table 4

| Compound applied | Dose (g a.i./ha) | Stellaria media Villars | | Matricaria inodora L. | |
|---|---|---|---|---|---|
| | | Inhibitory rate (%) | Expectation (%) | Inhibitory rate (%) | Expectation (%) |
| (A) + (D) | 25 + 5 | 96 | 81 | 77 | 47 |
| | 50 + 10 | 100 | 92 | 92 | 71 |
| (A) | 25 | 19 | | 2 | |
| | 50 | 48 | | 13 | |
| (D) | 5 | 77 | | 46 | |
| | 10 | 85 | | 67 | |

Table 5

| Compound applied | Dose (g a.i./ha) | *Stellaria media Villars* | | *Matricaria inodora L.* | |
|---|---|---|---|---|---|
| | | Inhibitory rate (%) | Expectation (%) | Inhibitory rate (%) | Expectation (%) |
| (A) + (E) | 25 + 2 | 95 | 78 | 85 | 72 |
| | 50 + 4 | 100 | 93 | 100 | 82 |
| (A) | 25 | 10 | | 5 | |
| | 50 | 25 | | 10 | |
| (E) | 2 | 75 | | 70 | |
| | 4 | 90 | | 80 | |

As clearly shown in Tables 4 and 5, the application of each combination exerted an excellent herbicidal effect largely exceeding the expectation on *Stellaria media Villars* and *Matricaria inodora L.* compared with the case of the foliar application of each active ingredient alone.

While the invention has been described in detail and with reference to specific embodiments thereof, it will be apparent to one skilled in the art that various changes and modifications can be made therein without departing from the spirit and the scope thereof.

This application is based on Japanese patent application No. 2004-309532 filed October 25, 2004, the entire contents thereof being hereby incorporated by reference.

INDUSTRIAL APPLICABILITY

The invention provides a herbicide composition that exerts a synergistic effect and, therefore, is expected as establishing an elevated herbicidal effect and enabling weed control in a lowered chemical dose even in the case of weed species or cultivation conditions in which the thienopyrimidine derivative represented by the formula (I) or the compound(s) known as having herbicidal activity cannot exert a sufficient effect are each employed solely.

**Claims**

1. A herbicide composition comprising, as active ingredients, at least one compound selected from the thienopyrimidine derivatives represented by the formula (I) :

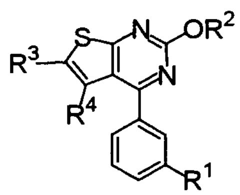

(I)

wherein $R^1$ represents a fluoroalkyl group having 1 or 2 carbon atoms, a fluoroalkoxy group having 1 or 2 carbon atoms or a fluoroalkylthio group having 1 or 2 carbon atoms,
$R^2$ represents a linear or branched alkyl group having 1 to 4 carbon atoms or a linear or branched fluoroalkyl group having 1 to 4 carbon atoms, and
$R^3$ and $R^4$ each independently represent a hydrogen atom or a linear or branched alkyl group having 1 to 3 carbon atoms; and
one or two or more kinds of herbicides selected from a urea-based herbicide, a dinitroaniline-based herbicide, a phenoxypropionic acid-based herbicide, a cyclohexanedione-based herbicide, an imidazolinone-based herbicide, a sulfonylurea-based herbicide, a carbamate-based herbicide, a triazolinone-based herbicide, a triazolopyrimidine-based herbicide, fluroxypyr or a derivative thereof, clopyralid or a derivative thereof, flufenacet, flurtamone and pinoxaden.

2. The herbicide composition according to claim 1, wherein the urea-based herbicide is isoproturon, chlorotoluron or methabenzthiazuron.

3. The herbicide composition according to claim 1, wherein the dinitroaniline-based herbicide is trifluralin, benfluralin, prodiamine, oryzalin, butralin or pendimethalin.

4. The herbicide composition according to claim 1, wherein the phenoxypropionic acid-based herbicide is diclofop, fenoxaprop, clodinafop, a derivative thereof or an optically active substance thereof.

5. The herbicide composition according to claim 1, wherein the cyclohexanedione-based herbicide is tralkoxydim.

6. The herbicide composition according to claim 1, wherein the imidazolinone-based herbicide is imazamethabenz.

7. The herbicide composition according to claim 1, wherein the sulfonylurea-based herbicide is amidosulfuron, iodosulfuron, chlorimuron-ethyl, sulfometuron-methyl, primisulfuron, bensulfuron-methyl, ethoxysulfuron, cyclosulfamuron, chlorsulfuron, metsulfuron-methyl, tribenuron-methyl, triasulfuron, tritosulfuron, trifloxysulfuron, cinosulfuron, ethametsulfuron-methyl, triflusulfuron-methyl, prosulfuron, thifensulfuron-methyl, pyrazosulfuron-ethyl, halosulfuron-methyl, foramsulfuron, flazasulfuron, mesosulfuron, rimsulfuron, nicosulfuron, flupyrsulfuron-methyl or a salt thereof, imazosulfuron or sulfosulfuron.

8. The herbicide composition according to claim 1, wherein the carbamate-based herbicide is tri-allate.

9. The herbicide composition according to claim 1, wherein the triazolinone-based herbicide is flucarbazone, propoxycarbazone or a salt thereof.

10. The herbicide composition according to claim 1, wherein the triazolopyrimidine-based herbicide is flumetsulam, florasulam or cloransulam-methyl.

11. A method for controlling weeds harmful to crops, which comprises applying an effective amount of the herbicide composition according to any one of claims 1 to 10 to weeds or soil to be treated.

## INTERNATIONAL SEARCH REPORT

International application No.
PCT/JP2005/019413

A. CLASSIFICATION OF SUBJECT MATTER
***A01N43/90***(2006.01), ***A01N33/18***(2006.01), ***A01N35/10***(2006.01), ***A01N39/02***(2006.01), ***A01N43/40***(2006.01), ***A01N43/50***(2006.01), ***A01N43/76***(2006.01), ***A01N47/12***(2006.01), ***A01N47/30***(2006.01), ***A01N47/36***(2006.01),

According to International Patent Classification (IPC) or to both national classification and IPC

B. FIELDS SEARCHED

Minimum documentation searched (classification system followed by classification symbols)
A01N33/18, A01N35/10, A01N39/02, A01N43/40, A01N43/50, A01N43/76, A01N43/90, A01N47/12, A01N47/30, A01N47/36, A01N47/38

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | WO 2004/029060 A1 (Nihon Nohyaku Co., Ltd.), 08 April, 2004 (08.04.04), Claims; page 63, line 14 to page 71, line 21; examples & EP 1544202 A1 & JP 2004-137270 A | 1-11 |
| A | JP 6-87835 A (Rohm and Haas Co.), 29 March, 1994 (29.03.94), & EP 579424 A1 & US 5378678 A & US 5451565 A | 1-11 |

☐ Further documents are listed in the continuation of Box C.　　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 January, 2006 (04.01.06) | 17 January, 2006 (17.01.06) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2005/019413

Continuation of A. CLASSIFICATION OF SUBJECT MATTER
(International Patent Classification (IPC))

***A01N47/38***(2006.01)

(According to International Patent Classification (IPC) or to both national classification and IPC)

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004137270 A
- JP 2004309532 A


### Non-patent literature cited in the description


- The Pesticide Manual. 2003
- **SHIGEMI SHIBUYA.** SHIBUYA INDEX-2002. SHIBUYA INDEX Kenkyukai, 15 December 2001
- **COLBY, S.R.** *Weeds,* 1967, vol. 15, 20-22